# EUROPÄISCHE PATENTANMELDUNG

(11) **EP 1 279 474 A1**
(43) Veröffentlichungstag der Anmeldung: **29.01.2003**
(21) Anmeldenummer: 01250275.3
(22) Anmeldetag: 22.07.2001
(51) Int. Cl.: B29C 45/14, B65D 25/36

(54) **Verfahren zum Herstellen von mehrfarbigen Verpackungsteilen**

(71) Anmelder: Spritzgusswerk KG Richard Rassbach GmbH & Co., 13509 Berlin (DE)
(72) Erfinder: Hellwig, Herbert, c/o Spritzgusswerk KG, 13509 Berlin (DE)
(74) Vertreter: Hoffmann, Klaus-Dieter, Dipl.-Ing.

(57) **Zusammenfassung**

Die Erfindung betrifft ein Verfahren zum Erstellen von in unterschiedlichen Koordinaten angeordneten Außenflächen von Verpackungsteilen aus Kunststoff, insbesondere von Verschlußdeckeln für Behälter in einem Originalfarbton wie z.B. dem des Metalls "Gold" oder dem des Metalls "Silber" und/oder unterschiedlich in diesen Originalfarbtönen. Hierzu wird erfindungsgemäß für jede Außenfläche in den unterschiedlichen Koordinaten des Verschlußdeckels ein dem Umriß der Außenfläche entsprechender abgewickelter Zuschnitt aus einer im Originalfarbon des Metalls "Gold" und/oder des Metalls "Silber" gefärbten Folie aus Kunststoff hergestellt, in ein Spritzgußwerkzeug eingelegt und bei der Herstellung des Verschlußdeckels im an sich bekannten in-mould-labeling Verfahren direkt mit dem Basismaterial des Verschlußdeckels untrennbar verschmolzen und paßgerecht auf der zugeordneten Außenfläche vorgesehen, wobei jede Außenfläche mit dem geforderten Originalfarbton versehen wird.

## Beschreibung

Die Erfindung betrifft ein Verfahren zum Erstellen von in unterschiedlichen Koordinaten (Dimensionen) angeordneten Außenflächen und/oder -abschnitten von Verpackungsteilen aus Kunststoff, insbesondere von Verschlußdeckeln für Behälter in einem Farbton und/oder in unterschiedlichen Farbtönen.

Die Erfindung betrifft ferner ein Verfahren zum Gestalten der Außenflächen eines den oberen Rand eines Kunststoffbehälters umfassenden Schutzelementes und mindestens einer in einer Ausnehmung des letzteren eingepaßten, einen Originalitätsverschluß für den Behälterdeckel bildenden und über Sollbruchstellen mit dem Schutzelement und der Behälterwand verbundenen Abreißelementes in unterschiedlichen Farben und/oder mit Bedruckungen.

Es ist allgemein bekannt, Teile von Verpackungen aus Kunststoff, wie Kunststoffbehälter und zugehörige Verschlußdeckel im Spritzgußverfahren aus jeweils unterschiedlich gefärbten Basismaterial herzustellen. Bekannt sind auch für die mehrfarbige Rundumbedruckung fertig geformter Rechteckbecher aus Kunststoff verhältnismäßig komplex aufgebaute und mit bis zu 5 Farbwerken bestückte Druckmaschinensysteme (DE-Z.: Neue Verpackung 6/74 S. 788-790).

Nach der DE 197 37 900 A1 ist weiterhin ein 2-Farben-Spritzverfahren bekannt, mit dem zur signalartigen Kennzeichnung ein einen Originalitätsverschluß bildendes Abreißelement, das in eine Ausnehmung eines den oberen Rand eines Kunststoffbehälters umfassenden Schutzelementes eingepaßt wird, das den benachbarten Rand des Behälterdeckels unzugänglich abdeckt, optisch gut erfaßbar, farblich signalartig hervorgehoben wird, d.h., das Schutzelement und die Abreißlasche werden aus farblich unterschiedlichen, optisch gut erfaßbaren, sich signalartig voneinander abhebenden Kunststoffen spritzgußmäßig hergestellt. Mit derartigen Spritzverfahren mit eingfärbten Kunststoffen ist die Erstellung von Verpackungen aus Kunststoff im bestimten Origilafarbtönen wie z.B. im Originalfarbton des Metall "Gold" oder des Metall "Silber" bislang nicht möglich.

Bekannt ist schließlich das sog. In-Mould-Labeling (IML) Verfahren zum Versehen von Verpackungseinheiten aus Kunststoff mit Bedruckungen jeder Art (z.B. Informationsblatt "Auf Papier und Kunstsoff VOG Print-Spezialitäten" der Vogt GmbH), bei dem eine mit dem gewünschten Motiv bedruckte Folie, die aus dem gleichen Material wie die Verpackung besteht, direkt in ein Spritzgußwerkzeug eingelegt und beim Produktionsvorgang der Verpackung untrennbar mit dem Basismaterial der Verpackung verschmolzen wird.

Der Erfindung liegt die Aufgabe zugrunde, ein Verfahren der eingangs erwähnten Art zur Verfügung zu stellen, mit dem sämtliche, in unterschiedlichen Koordinaten angeordnete Außenflächen und/oder auch Außenflächenabschnitte von Verpackungsteilen aus Kunststoff wie Verschlußdeckel in einem bestimmten Farbton wie z.B. dem Originalfarbton des Metalls "Gold" oder des Metalls "Silber" oder jeweils in bestimmten zueinander unterschiedlichen derartigen Originalfarbtönen wie des Metalls "Gold" und/oder des Metalls "Silber" effektiv in exakter Weise gestaltet werden können. Hiermit soll zugleich ein effektives Verfahren zum gleichzeitigen Versehen der Außenflächen des den oberen Rand eines Kunststoffbehälters umfassenden Schutzelementes und eines in diesen eingepaßten, einen Originalitätsverschluß des Behällterdeckels bildenden Abreißelementes mit zueinander unterschiedlichen signalartigen Farbtönen und/oder Bedruckungen bereit gestellt werden.

Diese Aufgabe wird erfindungsgemäß dadurch gelöst, daß für jede Außenfläche oder mindestens einen bestimmten Außenflächenabschnitt in den unterschiedlichen Koordinaten des Verpackungsteils ein dem Umriß der Außenfläche bzw. des Außenflächenabschnitts entsprechender abgewickelter Zuschnitt aus einer an sich bekannten Folie oder eines Abschnitts letzterer, die bzw. der entsprechend dem geforderten Farbton der Außenfläche bzw. des Außenflächenabschnitts gefärbt ist, hergestellt, in ein Spritzwerkzeug eingelegt und bei der Herstellung des Verschlußdeckels im an sich bekannten in-mould-labeling Verfaahren direkt mit dessen Basismaterial untrennbar verschmolzen und paßgerecht auf der zugeordneten Außenfläche bzw. dem Außenflächenabschnitt vorgesehen wird, wobei jede Außenfläche bzw. der Außenflächenabschnitt des Verpackungsteils mit dem geforderten Farbton versehen wird.

Vorzugsweise werden die den Außenflächen in den unterschiedlichen Koordinaten des Verschlußdeckels zugeordneten abgewickelten Folienzuschnitte aus einer im Originalfarbton des Metalls "Gold" und/oder des Metalls "Silber" gefärbten Folie hergestellt. Weiterhin wird vorteilhafterweise ein im Grundriß achteckförmiger oder ovalförmiger Verschlußdeckel mit einem sich vom Verschlußboden vertikal erstreckenden umlaufenden Randteil durch in-mould-labeling eines dem Umriß des Bodens des Verschlußdeckels und dessen umlaufenden Randteils jeweils entsprechenden achteck- oder ovalförmigen bzw. bandförmigen abgewickelten Zuschnitts einer im Originalfarbton des Metalls "Gold" und/oder des Metalls "Silber" gefärbten Folie auf sämtlichen Außenflächen in den unterschiedlichen Koordinaten des Verschlußdeckels im Originalfarbton des Metalls "Gold" und/oder des Metalls "Silber" gestaltet.Hierbei können auch bedruckte Folienzuschnitte verwendet werden.

Das Verfahren zum gleichzeitigen Versehen der Außenflächen eines den oberen Rand eines Kunststoffbehälters umfassenden Schutzelementes und mindestens eines in dieses eingepaßten, einen Originalitätsverschluß für den Behälterdeckel bildenden Abreißelementes mit zueinander unterschiedlichen, signalartigen Farbtönen und/oder Bedruckungen zeichnet sich erfindungsgegemäß dadurch aus, daß für die Außenfläche des Schutzelementes des Behälters und für die Außenfläche des Abreißelementes jeweils ein dem Umriß der jeweiligen Außenfläche entsprechender abgewickelter Zuschnitt einer an sich bekannten Folie oder eines an sich bekannten Folienabschnitts, die bzw. der entsprechend dem geforderten Farbton der jeweiligen Außenfläche gefärbt ist, hergestellt, in ein Spritzwerkzeug eingelegt und bei der Herstellung des Kunststoffbehälters im an sich bekannten in-mould-labeling Verfahren direkt mit dem Basismaterial des Schutzelementes bzw. des Abreißelementes untrennbar verschmolzen und paßgerecht auf der zugeordneten Außenfläche vorgesehen wird, wobei die Außenfläche des Schutzelementes und die Außenfläche des Abreißelementes jeweils mit dem geforderten Farbton und/oder der geforderten Bedruckung versehen werden.

Als Zuschnitt für das Abreißelement kann ein Teil eines anderen abgewickelten Zuschnitts verwendet werden, das mit dem anderen Zuschnitt über eine Perforation verbunden sein kann.

Im Gegensatz zu bisher bekannten Verfahren ist es mit dem erfindungsgemäßen Verfahren überraschenderweise möglich, alle Außenflächen eines Verpackungsteils, wie z.B den Deckelboden und den Deckelrand eines Verschlußdeckels eines Kaffee-Behälters nur im Originalfarbton des Metalls "Gold" oder des Metalls "Silber" oder wechselseitig in einem dieser Originalfarbtöne in ansprechender Weise ohne Oberflächenverzerrungen exakt zu gestalten. Insbesondere ist es mit dem erfindungsgemäßen Verfahren auf vereinfachte Weise möglich, bei Kunststoffbehältern mit Originalitätsverschluß des Behälterdeckels die Außenfläche des den Deckelrand abdeckenden Schutzelementes und die Außenfläche des Originalitätsverschlusses, die schlüssig zueinander in einer Umfangslinie des Behälters angeordnet sind, in sich signalartig unterscheidenden Farbtönen zu gestalten und/oder mit geforderten Bedruckungen zu versehen.

Das erfindungsgemäße Verfahren wird nun anhand der Zeichnungen erläutert: In diesen sind:
**Fig. 1A und 1B** der Grundriß eines abgewickelten Folienzuschnitts des Bodens bzw. des abgewickelten Folienzuschnitts des Randteils für einen achteckförmigen Verschlußdeckel,
**Fig. 2** eine perspektivische Ansicht eines achteckförmigen Verschlußdeckels, der im in-mould-labeling Verfahren unter Verwendung der abgewickelten Folienzuschnitte nach den Fig. 1A und 1B hergestelt worden ist,
**Fig. 3A und 3B** der Grundriß eines abgewickelten Folienzuschnitts des Bodens bzw. des abgewickelten Folienzuschnitts des Randteils für einen ovalförmigen Verschlußdeckel,
**Fig. 4** eine perspektivische Ansicht eines ovalfömigen Verschlußdeckels, der im in-mould-labeling Verfahren unter Verwendung der Folienzuschnitte nach den Fig. 3A und 3B hergestellt worden ist,
**Fig. 5** eine perspektivische Ansicht einer anderen Ausführungsform des ovalförmigen Verschlußdeckels, dessen Außenfläche des Bodens mit einer Feinrasterung bzw. des Randteils mit einer Riffelung gestaltet ist,
**Fig. 6A und 6B** eine perspektivische Ansicht eines Rundbehälters aus Kunststoff mit in dem Schutzelement des Behälters außenflächenschlüssig integriertem, einen Originalitätsverschluß des Behälterdeckels bildenden Abreißelement bzw. der Grundriß eines abgewickelten Folienzuschnitts mit einem dem Umriß der Außenfläche des Abreißelementes entsprechenden Zuschnittsteil.

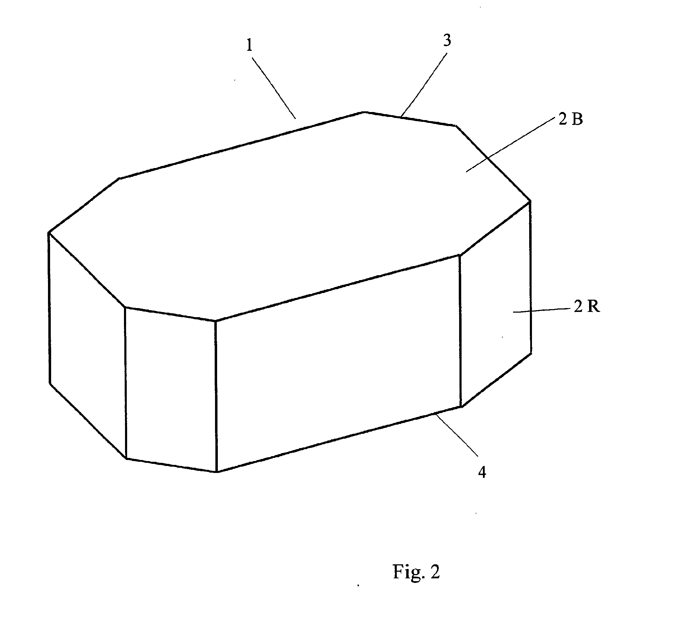

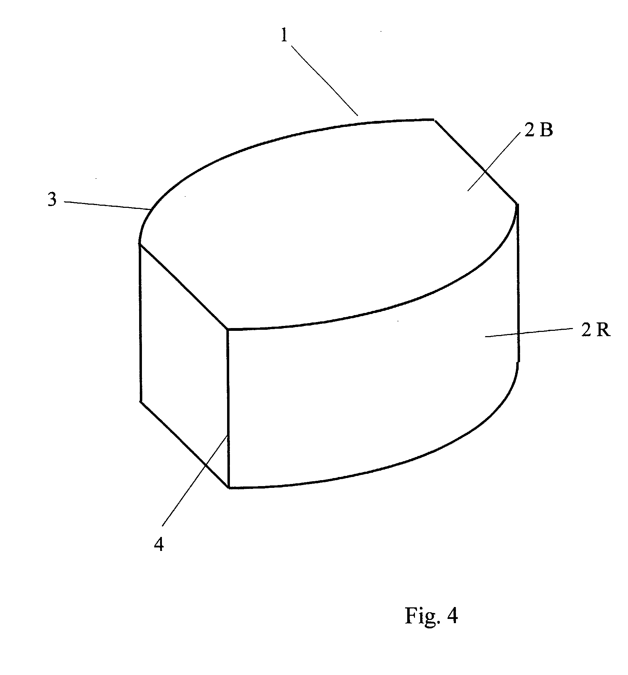

Verschlußdeckel 1 aus Kunststoff gemäß Fig. 2 und Fig. 4 für z.B. Kaffee-Behälter werden vom Handel vorwiegend in mit speziellen Farbtönen und/oder Bedruckungen der Außenflächen 2B und 2R der Verschlußdeckel 1 gefordert, insbesondere in Originalfarbtönen des Metalls "Gold" und des Metalls "Silber", wobei z.B. sämtliche Außenflächen 2B und 2R des Verschlußdeckels 1 in einem dieser Originalfarbtöne oder die Außenfläche 2B des Deckelbodens 3 und die Außenfläche 2R des Randteils 4 des Verschlußdeckels 1 wechselseitig in den genannten Originalfarbtönen gestaltet werden sollen. Mit den bislang gängigen Spritzgußverfahren von Verpackungteilen wie Verschlußdeckeln aus farbigem Kunststoff ist es aufgrund der molekularen Eigenschaften des eingesetzten Kunststoffmaterials nicht möglich, z.B. die Außenflächen des Verpackungsteils in den Originalfarbtönen des Metalls "Gold" und/oder des Metalls "Silber" zu gestalten. Derartige Originalfarbtöne für die Außenflächen von z.B. Verschlußdeckeln aus Kunststoff oder die Außenflächen von Originalitätsverschlüssen des Verschlußdeckels von Kunststoffbehältern sind aber gerade wegen ihrer Werbewirksamkeit sowie ihrer optischen Signalwirkung vom Handel verstärkt gewünscht.

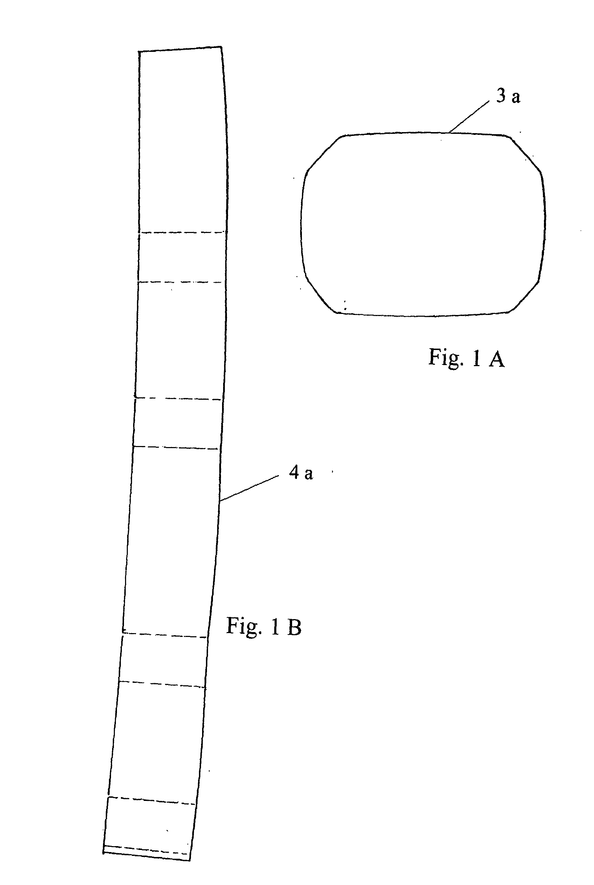

**Fig. 1A und 1B** zeigen den Grundriß eines abgewickelten Folienzuschnitts 3a des Deckelbodens 3 bzw. des abgewickelten Folienzuschnitts 4a des Randteils 4 für einen achteckförmigen Verschlußdeckels 1 für Kaffee-Behälter aus Kunststoff gemäß Fig. 2. Die abgewickelten Folienzuschnitte 3a und 4a werden aus einer im Originalfarbton des Metalls "Gold" oder des Metalls "Silber" eingefärbten Kunststoffolie ausgestanzt, vor dem Spritzgießen des Verschlußdeckels direkt in das Spritzgußwerkzeug eingelegt und bei der spritzgußmäßigen Herstellung des Verschlußdeckels 1 unmittelbar mit dessen Basismaterial verschmolzen. Auf diese Weise ist es überraschend möglich, sämtliche Außenflächen des achteckförmigen Verschlußdeckels 1 ohne Oberflächenverzerrungen im Originalfarbton des Metalls "Gold" oder des Metalls "Silber" exakt zu gestalten. Die Außenflächen des Deckelbodens 3 und des Randteils 4 des Verschlußdeckels 1 können auch wechselseitig in Originalfarbton des Metalls "Gold" und des Metalls "Silber" gestaltet werden, wenn die zugeordneten abgewickelten Folienzuschnitte 3a und 4a aus im entsprechenden Originalfarbtönen eingefärbten Folien hergestellt werden.

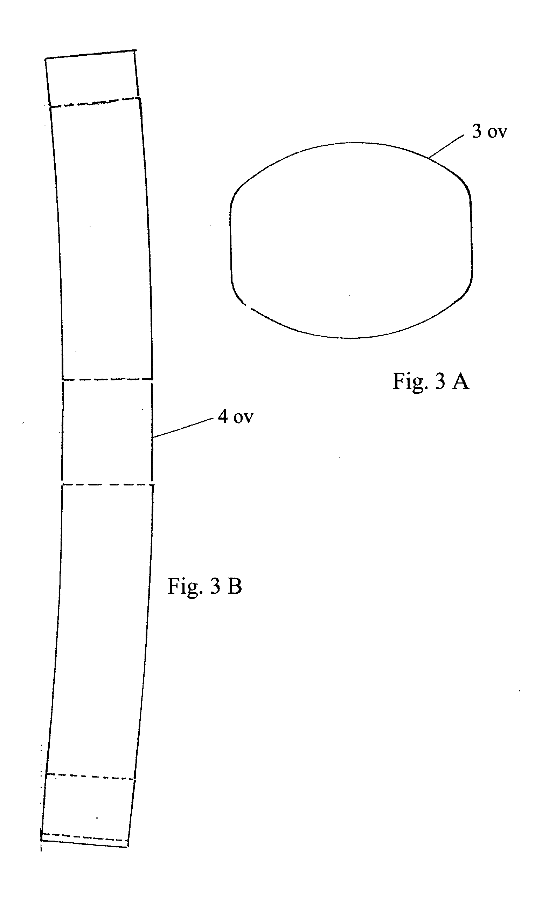

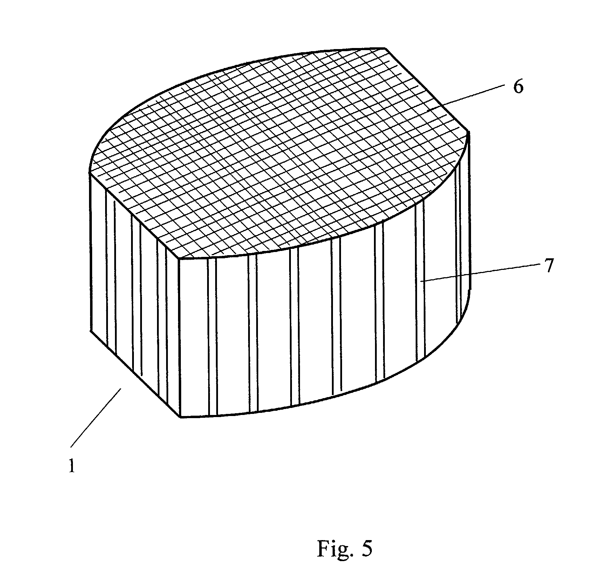

Die Fig. 3A und 3B zeigen im Grundriß abgewickelte Folienzuschnitte 3ov und 4ov des Deckelbodens 3 und des Randteils 4 für einen ovalförmigen Verschlußdeckel 1 für Kaffee-Behälter gemäß Fig. 4 bzw. gemäß Fig. 5. Die Herstellung der ovalförmigen Verschlußdeckel 1 gemäß Fig. 4 und Fig. 5 erfolgt in der gleichen Weise im in-mould-labeling Verfahren wie in Bezug auf den Verschlußdeckel 1 gemäß Fig. 2 oben beschrieben worden ist, wobei lediglich die Ausführungsform des ovalförmigen Verschlußdeckels 1 nach Fig. 5 auf der Außenseite des Deckelbodens 3 mit einer Feinrasterung 6 und auf der Außenseite des Randteils 4 mit einer Riffelung 7 gestaltet wird.

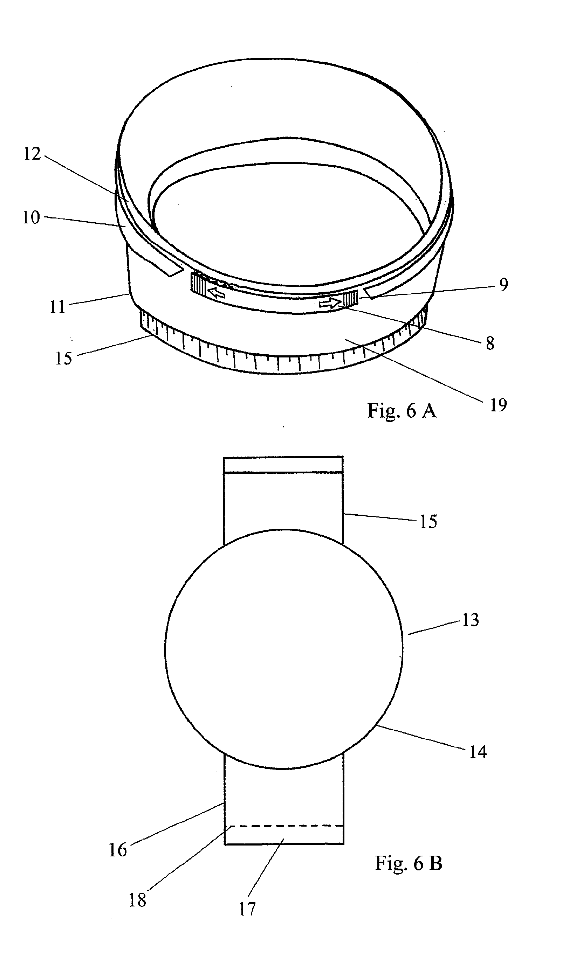

Aus den Fig. 6A und 6B geht die Anwendung des erfindungsgemäßen Verfahrens zum Versehen eines einen Originalitätsverschluß für einen Behälterdeckel (nicht gezeigt) bildenden Abreißelementes 8 in vereinfachter und exakter Weise hervor. Wie Fig. 6A zeigt, ist das Abreißelement 8 in eine umfangsmäßige Ausnehmung 9 eines Schutzelementes 10 eines Rundbehälters 11, das den oberen Rand 12 des letzteren umfaßt, außenflächenschlüssig mit dem Schutzelement 10 eingepaßt.

Fig. 6B zeigt einen abgewickelten Zuschnitt 13 aus einer in einem gewünschten signalfarbenmäßigen Originalfarbton eingefärbten Kunststoffolie. Der Mittelteil 14 des Zuschnitts 13 entspricht dem Umriß des Bodens 15 des Rundbehälters 11. Symmetrisch mittig am Umfang des Folienzuschnitts 13 sind einandergegenüberliegend längliche Laschen 15, 16 vorgesehn, deren Länge der Höhe des Rundbehälters 11 entspricht. Das obere Ende der Lasche 16 schließt ein Zuschnittsteil 17 ein, das dem Umriß des Abreißelementes 8 entspricht. Das Zuschnittsteil 17 ist mit dem Rest der Lasche 16 über eine Perforation 18 verbunden. Bei der Herstellung des Rundbehälters 11 im Spritzgußverfahren wird der zuvor in das Spritzwerkzeug eingelegte Zuschnitt 13 im in-mould-labeling Verfahren mit dem Material des Rundbehälters 11 an dessen Boden 15 sowie am Behälterumfang 19 über die Breite der jeweiligen Lasche 15; 16 sowie mit dem Zuschnittsteil 17 nach Trennung der Perforation 18 mit dem Material des Abreißelementes 8 unmittelbar verschmolzen derart, daß letztere exakt und auf überraschend einfache Weise in der gewünschten Signalfarbe gestaltet wird. Das Schutzelement 10 des Rundbehälters 11 kann mittels eines angepaßten Folienzuschnitts in entsprechender Weise im Wege des in-mould-labeling Verfahrens in einem gewünschten Farbton gestaltet werden. Weiterhin ist es möglich, durch Verwendung bedruckter Folienzuschnitte das Schutzelement 10 und/oder das den Originalitätsverschluß bildenden Abreißelement 8 mit einer Bedruckung zu versehen.

## Patentansprüche

1. Verfahren zum Erstellen von in unterschiedlichen Koordinaten angeordenten Außenflächen und/oder Außenflächenabschnitten von Verpackungsteilen aus Kunststoff, insbesondere von Verschlußdeckeln für Behälter in einem Farbton und/oder in unterschiedlichen Farbtönen, **dadurch gekennzeichnet, daß** für jede Außenfläche oder mindestens einen bestimmten Außenflächenabschnitt in den unterschiedlichen Koordinaten des Verpackungsteils (Verschlußdeckels) ein dem Umriß der Außenfläche bzw. des Außenflächenabschnitts entsprechender abgewickelter Zuschnitt aus einer an sich bekannten Folie aus Kunststoff oder einem an sich bekannten Folienabschnitt aus Kunststoff, die bzw. der entsprechend dem geforderten Farbton der Außenfläche bzw. des Außenflächenabschnitts gefärbt ist, hergestellt, in ein Spritzwerkzeug eingelegt und bei der Herstellung des Verpackungsteils (Verschlußdeckels) im an sich bekannten in-mould-labeling Verfahren direkt mit dessen Basismaterial untrennbar verschmolzen und paßgerecht auf der zugeordneten Außenfläche bzw. dem Außenflächenabschnitt vorgesehen wird, wobei jede Außenfläche bzw. der Außenflächenabschnitt des Verpackungsteils (Verschlußdeckels) mit dem geforderten Farbton versehen wird.

2. Verfahren nach Anspruch 1, **dadurch gekennzeichnet, daß** die den Außenflächen in den unterschiedlichen Koordinaten des Verschlußdeckels zugeordneten abgewickelten Folienzuschnitte aus einer im Originalfarbton des Metalls "Gold" und/ oder des Metalls "Silber" gefärbten Folie hergestellt werden.

3. Verfahren nach Anspruch 1 und 2, **dadurch gekennzeichnet, daß** ein im Grundriß achteckförmiger oder ovalförmiger Verschlußdeckel, der einen sich vom Verschlußboden vertiriß des Bodens des Verschlußdeckels und dessen umlaufenden Randteils jeweils entsprechenden achteck- oder ovalförmigen bzw. bandförmigen abgewickelten Zuschnitts einer im Originalfarbton des Metalls "Gold" und/oder des Metalls "Silber" gefärbten Folie auf den entsprechenden Außenflächen in den unterschiedlichen Koordinaten des Verschlußdeckels im Originalfarbton "Gold" und/oder "Silber" gestaltet wird.

4. Verfahren nach einem der Ansprüche 1 bis 3, **dadurch gekennzeichnet, daß** bedruckte Folienzuschnitte verwendet werden.

5. Verfahren zum Versehen der Außenflächen eines den oberen Rand eines Kunststoffbehälters umfassenden Schutzelementes und mindestens eines in einer Ausnehmung des letzteren eingepaßten, einen Originalitätsverschluß für den Behälterdeckel bildenden und über Sollbruchstellen mit dem Schutzelement und der Behälterwand verbundenen Abreißelementes mit zueinander unterschiedlichen Farben und/oder Bedruckungen, **dadurch gekennzeichnet, daß** für die Außenfläche des Schutzelementes des Behälters und für die Außenfläche des Abreißelementes ein dem Umriß der jeweiligen Außenfläche entsprechender abgewickelter Zuschnitt einer an sich bekannten Folie oder eines an sich bekannten Folienabschnitts , die bzw. der entsprechend dem geforderten Farbton der jeweiligen Außenfläche gefärbt ist, hergestellt, in ein Spritzwerkzeug eingelegt und bei der Herstellung des Kunststofbehälters im an sich bekannten in-mould-labeling Verfahren direkt mit dem Basismaterial des Schutzelementes bzw. des Abreißelementes untrennbar verschmolzen und paßgerecht auf der zugeordneten Außenfläche vorgesehen wird, wobei die Außenfläche des Schutzelemntes und die Außenfläche des Abreißelementes jeweils mit dem geforderten Farbton und/oder der geforderten Bedruckung versehen werden.

6. Verfahren nach Anspruch 5, **dadurch gekennzeichnet, daß** als Zuschnitt für das Abreißelement ein Teil eines anderen abgewickelten Zuschnitts verwendet wird.
ment ein Teil eines anderen abgewickelten Zuschnitts verwendet wird.

7. Verfahren nach Anspruch 6, **dadurch gekennzeichnet, daß** das als Zuschnitt für das Abreißelement gewählte Teil des anderen abgewickelten Zuschnitts mit diesem über eine Perforation verbunden wird.

8. Verfahren nach einem der Ansprüche 1 bis 7, **dadurch gekennzeichnet, daß** die Außenflächen und/oder Außenflächenabschnitte wahlweise mit einer Feinrasterung und/oder einer Riffelung versehen werden.

9. Verwendung einer im Originalfarbton des Metalls "Gold" und/oder des Metalls "Silber" eingefärbten, an sich bekannten Folie aus Kunststoff zum Erstellen der in unterschiedlichen Koordinaten angeordneten Außenflächen eines Verschlußdeckels aus Kunststoff für Kaffee-Behälter, indem für jede Außenfäche des Verschlußdeckels ein deren Umriß entsprechender abgewickelter Folienzuschnitt hergestellt, dieser jeweils in ein Spritzwerkzeug eingelegt und beim spritzgußmäßigen Herstellen des Verschlußdeckels im an sich bekannten in-mould-labeling Verfahren mit dem Basismaterial des Verschlußdeckels untrennbar verschmolzen und dabei paßgerecht auf der zugeordneten Außenfläche des Verschlußdeckels vorgesehen wird, wobei letztere mit dem geforderten Originalfarbton versehen wird.
